# EUROPÄISCHE PATENTSCHRIFT

(11) **EP 0 548 545 B1**
(45) Veröffentlichungstag und Bekanntmachung des Hinweises auf die Patenterteilung: **03.01.1996**
(21) Anmeldenummer: 92119763.8
(22) Anmeldetag: 20.11.1992
(51) Int. Cl.: B65G 59/02

(54) **Verfahren und Vorrichtung zum Aufnehmen von Stückgut**
Method and device for picking up an article
Méthode et dispositif pour saisir un objet

(30) Priorität: 23.12.1991 CH 3827/91
(43) Veröffentlichungstag der Anmeldung: 30.06.1993
(73) Patentinhaber: Digitron AG, CH-5000 Aarau (CH)
(72) Erfinder: Walter, Krieg, CH-2555 Brügg (CH)
(74) Vertreter: Blum, Rudolf Emil Ernst

(56) Entgegenhaltungen:
- DE-A- 1 907 109
- GB-A- 1 276 070
- GB-A- 2 205 300

## Beschreibung

Die Erfindung betrifft ein verfahren zum Aufnehmen von Stückgut von bzw. auf einer Unterlage mittels eines horizontal verfahrbaren Aufnahmetisches, wobei der Aufnahmetisch eine antreibbare Transporteinrichtung für das Gut und mindestens an seinem in Verfahrrichtung liegenden Ende ein rollen- bzw. umlenkrollenartiges Aufnahmeorgan besitzt und wobei oberhalb des Aufnahmetisches eine Aufnahmehilfsvorrichtung vorgesehen ist. Ferner betrifft die Erfindung eine Vorrichtung zum Aufnehmen des paketförmigen Guts.

Aus der DE-OS Nr. 37 33 461 ist eine entsprechende Aufnahmevorrichtung für Bücher zu entnehmen. Die Aufnahmehilfsvorrichtung ist als Gegen- oder Rückhalter ausgebildet, welche die vergleichsweise leichtgewichtigen Bücher für die Aufnahme durch das Aufnahmeorgan festhält.

Eine solche Einrichtung eignet sich nicht dafür, paketförmiges Gut unterschiedlicher Art, wie es z.B. in Lagerhäusern von Grossverteilern anfällt, vom Boden oder von Stapeln automatisch aufzunehmen bzw. wieder abzusetzen. Insbesondere bei schweren Paketen stellt das Aufnehmen Probleme, da die Einwirkung des rollenartigen Aufnahmeorgans, welches das Paket durch Einwirkung auf dessen Stirnseite zum Aufnahmetisch hochhebt, wegen zu geringer Reibungskraft bzw. zu grossen Paketgewichts nicht ausreichend sein kann.

Die Reibungskraft kann auch durch Rückhaltung und entsprechend vergrösserte Andrückkraft der Aufnahmerollen nicht beliebig erhöht werden, da sonst die Verpackung beschädigt werden kann.

Eine andere Vorrichtung wird in GB-1 276 070 beschrieben. Hierbei handelt es sich um ein Lastaufnahmegerät mit einer Gegenstütze und oberhalb des Lastguts angeordneten Bändern, welche ein Kippen des Lastguts verhindern.

Auch bei dieser Vorrichtung müssen aber insbesondere bei einer schweren Last grosse Kräfte auf deren Stirnseite ausgeübt werden, die zu Beschädigungen des Guts oder seiner Verpackung führen können.

Es stellt sich deshalb die Aufgabe, ein Verfahren und eine Vorrichtung zum Aufnehmen von Stückgut zu schaffen, mittels welchem auch schwere Pakete ohne Beschädigung der Verpackung rasch aufnehmbar sind.

Diese Aufgabe wird gelöst mit den Merkmalen, wie sie in Anspruch 1 und 4 genannt sind.

Durch die Wirkung der Aufnahmehilfsvorrichtung kann die Aufnahmekraft auf zwei Stellen des Guts verteilt und damit ein insgesamt stärkeres Kippmoment bei kleinerer Belastung erzielt werden. Damit gelingt es, auch schwere Pakete aufzunehmen.

Die Aufnahmehilfsvorrichtung ist dabei vorzugsweise mit mindestens einem Transportband ausgerüstet, das nicht nur bei der Aufnahme, sondern auch beim Transport des Guts über den Aufnahmetisch mitwirkt. Damit lässt sich zusätzlich die Transportgeschwindigkeit erhöhen, indem das Gut nach der Aufnahme rasch beschleunigt werden kann.

Nachfolgend werden weitere Eigenschaften und Vorteile der Erfindung anhand von Ausführungsbeispielen erläutert, die in den Figuren näher dargestellt sind. Dabei zeigt
Figur 1 den Aufnahmevorgang in schematischer Darstellung;
Figur 2 das Unterfahren des Aufnahmetisches unter das Gut;
Figur 3 den Transport des Guts über den Aufnahmetisch;
Figur 4 eine perspektivische Darstellung eines Teils der Aufnahmevorrichtung mit Aufnahmetisch und Aufnahmehilfsvorrichtung, und
Figur 5 eine weitere Ausgestaltung des Kopfes einer Aufnahmehilfsvorrichtung.

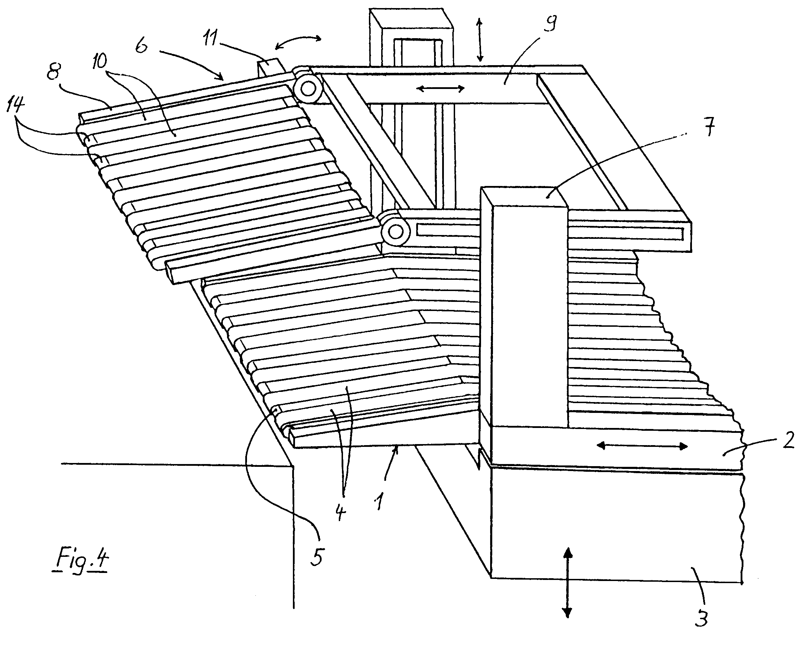

Die Aufnahmevorrichtung besitzt gemäss Fig. 4 einen Aufnahmetisch 1, der mit einem Schlitten 2 horizontal verfahrbar ist. Der Schlitten 2 ist auf einer Plattform 3 angeordnet, welche heb- und senkbar auf einem Fahrzeug, z.B. einem Regalförderzeug oder einem fahrerlosen Transportsystem, oder am Boden befestigt, angeordnet ist. Die Aufnahmevorrichtung kann auch Teil einer Kommissionier-Anlage sein. Der Aufnahmetisch ist mit umlaufenden Transportbändern 4 versehen, welche von einer vorderen Umlenkrolle 5 umgelenkt werden. Die vordere Umlenkrolle 5 hat vorzugsweise einen relativ kleinen Durchmesser, um die Hebehöhe für die Pakete auf dem Aufnahmetisch gering zu halten.

Der Schlitten 2 des Aufnahmetisches 1 und die Transportbänder 4 sind vorzugsweise separat angetrieben, so dass die Antriebsgeschwindigkeit der Transportbänder je nach der Aufnahmephase unabhängig von der Vorschubgeschwindigkeit des Aufnahmetisches steuerbar ist.

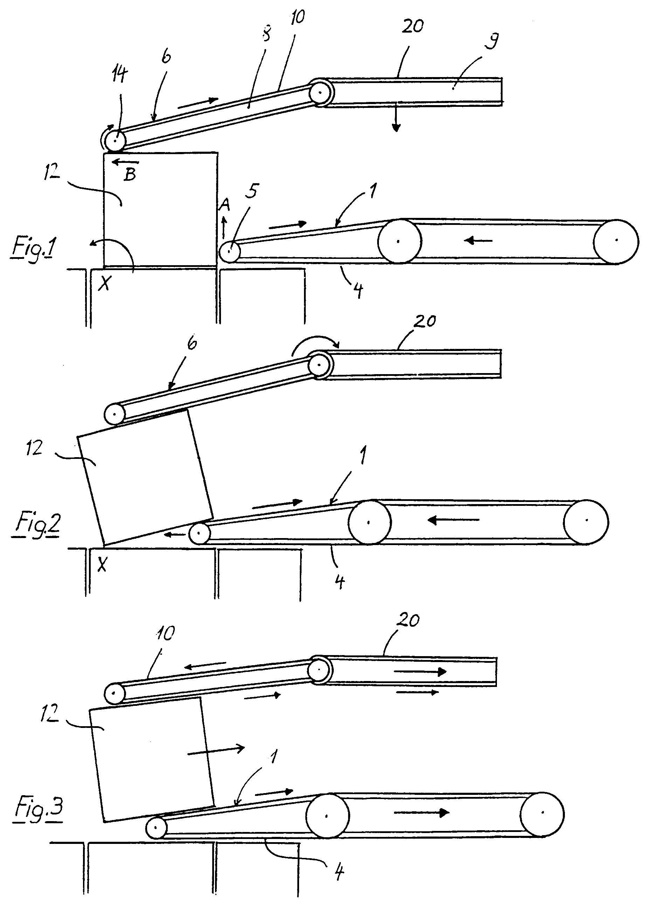

Oberhalb des Aufnahmetisches 1 ist eine Aufnahmehilfsvorrichtung 6 vorgesehen. Diese ist im vorliegenden Ausführungsbeispiel heb- und senkbar sowie vorund rückschiebbar an Stützen 7 auf dem Schlitten 2 angeordnet. Die Aufnahmehilfsvorrichtung 6 weist einen Gegentisch 8 zum Aufnahmetisch 1 auf, welcher von oben auf das aufzunehmende Paket absenkbar ist, wie z.B. aus Fig. 1 ersichtlich ist. Vorzugsweise ist der Gegentisch 8 schwenkbar an einem Tragrahmen 9 angeordnet, welcher an den Stützen 7 gelagert ist. Der Gegentisch 8 ist ebenfalls mit Transportbändern 10 oder dergleichen versehen, die mittels einem Antriebsmotor 11 nach beiden Seiten umlaufend antreibbar sind. Die Transportbänder 10 sind vorne um Umlenkrollen 14 herum geführt, welche mit der Paketoberseite zusammenwirken. Im Bereich des Tragrahmens 9 können diese Transportbänder 10 fortgesetzt sein durch Transportbänder 20, wie aus den Figuren 1 bis 3 ersichtlich ist.

Die in Fig. 4 gezeigte konstruktive Ausführung ist selbstverständlich im einzelnen abwandelbar im Rahmen der nachfolgend anhand der Figuren 1 bis 3 beschriebenen Funktionsweise.

Die Figuren 1 bis 3 zeigen die Phasen des Aufnahmevorgangs, die nachfolgend erläutert werden.

Zunächst wird die Plattform 3 in der Höhe so verfahren, dass sich der Aufnahmetisch 1 auf dem Niveau der unteren Stirnfläche eines aufzunehmenden Pakets 12 sowie in einem gewissen Abstand von der darunterliegenden Paketlage befindet. In dieser Position wird der Aufnahmetisch 1 horizontal gegen die Stirnfläche des Pakets 12 vorgeschoben. Falls das Paket 12 nicht an einer normierten Stelle plaziert ist, wird seine Position mit einem Näherungssensor am Aufnahmetisch 1 festgestellt, womit durch entsprechende Steuerung des Vorschubantriebs die Fahrgeschwindigkeit vor der Berührung der Stirnseite des Pakets reduziert wird. In der Phase gemäss Fig. 1 berührt deshalb der Aufnahmetisch 1 die Stirnfläche des Pakets mit kleiner Fahrgeschwindigkeit. Zugleich werden mittels eines zweiten Antriebs die Transportbänder 4, bzw. die umlenkrolle 5, kurzzeitig mit grösserer Geschwindigkeit angetrieben. Gelangen diese zur Anlage an die Stirnfläche des Paketes 12, so üben sie auf dieses durch Reibung eine Hebekraft aus, wie in Figur 1 durch Pfeil A angedeutet.

Gleichzeitig mit dem Anfahren des Aufnahmetisches an das Paket wird die Aufnahmehilfsvorrichtung 6 mit ihren Umlenkrollen gegen die Paketoberseite abgesenkt und zwar so, dass sie diese mit einstellbarer Kraft an ihrem der Stirnseite abgewandten Ende berührt. Zu diesem Zweck sind in der Aufnahmehilfsvorrichtung Kraftaufnehmer vorgesehen, mit welchen die Auflagekraft gemessen und die Bewegungen des Gegentisches 8 entsprechend gesteuert werden. Dadurch wird das Paket 12 an seiner Rückseite mit bestimmter Kraft nach unten belastet, womit sich seine Reibung gegenüber der unteren Paketlage erhöht. Zugleich werden die Transportbänder 10 horizontal so bewegt, dass eine nach rückwärts gerichtete Horizontalkraft auf die Oberseite des Pakets 12 einwirkt, wie in Fig. 1 mit dem Pfeil B angedeutet ist. Statt oder zusätzlich zur Bewegung der Transportbänder 10 kann der Gegentisch 8 als ganzes horizontal bewegt werden, um die Horizontalkraft B auf die Paketoberseite auszuüben. Diese Horizontalkraft B tritt synchron zur Hebekraft A des Aufnahmetisches 1 auf und bewirkt zusammen mit dieser ein Drehmoment auf das Paket um eine Achse X, welche der hinteren, unteren Paketkante entspricht. Das Paket 12 wird durch dieses Drehmoment um diese Paketkante nach rückwärts gekippt und vorne auf die Höhe des Aufnahmetisches 1 angehoben, wie in Figur 2 gezeigt. Auch bei relativ schweren Paketen ist so eine rasche Aufnahme ohne Beschädigung der Verpackung gewährleistet.

Ist das Paket 12 gemäss Figur 2 mit der Stirnseite auf den Aufnahmetisch 1 angehoben, so unterfährt dieser das Paket, wobei seine Transportbänder 5 mit entsprechender Geschwindigkeit in der Gegenrichtung angetrieben werden, so dass das Paket 12 gegenüber seiner Unterlage im wesentlichen nicht verschoben wird, bis es vollständig davon abgehoben ist. In dieser Phase kommt der Aufnahmehilfsvorrichtung 6 die Funktion zu, hochkantstehende Pakete zu stützen, um sie am Umfallen zu hindern. Sie steht beim Unterfahren im wesentlichen still. Der Gegentisch 8 kann dabei so verschwenkt und in der Höhe verstellt werden, dass er parallel zum Aufnahmetisch ausgerichtet und von diesem in Pakethöhe beabstandet ist.

Liegt das Paket schliesslich vollständig auf dem Aufnahmetisch, was z.B. mittels einem Kraftsensor feststellbar ist, werden die Transportbänder 4 und 10 bzw. 20 von Aufnahmetisch 1 und Aufnahmehilfsvorrichtung 6 zum Wegtransport des Pakets 12 angetrieben, wie in Figur 3 gezeigt. Zugleich fährt der Aufnahmetisch selbst zurück. Da das Paket 12 in dieser Phase an seiner Unter- und Oberseite durch die Transportbänder gehalten ist, kann es beim Wegtransport stark beschleunigt werden, womit eine höhere Transportgeschwindigkeit erzielbar ist. Dies gilt insbesondere für hochkant stehende Pakete, bei denen keine Gefahr des Umfallens besteht.

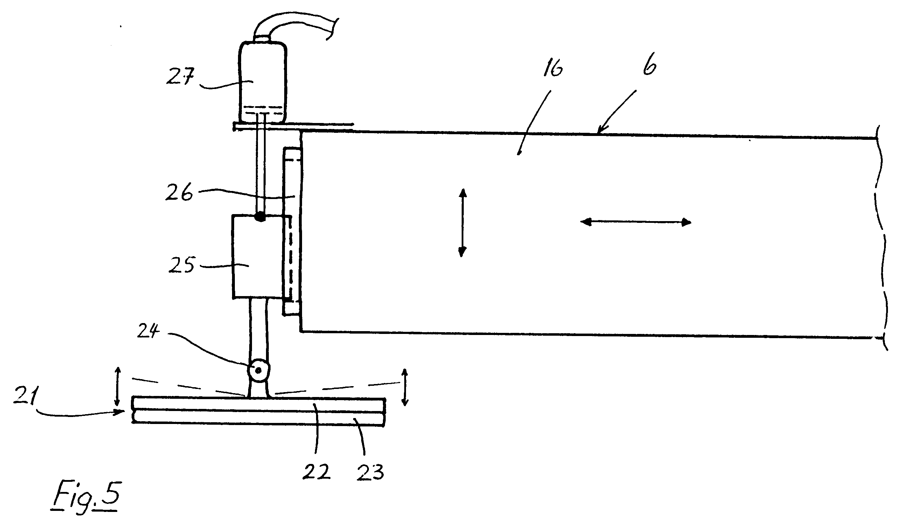

In Figur 5 ist eine weitere Ausführungsvariante des Kopfes der Aufnahmehilfsvorrichtung dargestellt. Statt der Umlenkrollen 14 und dem Gegentisch 8 ist an einem Arm 16 eine Andrückplatte 21 vorgesehen, welche mit der Oberseite des Pakets zusammenwirkt. Die Andrückplatte 21 besitzt einen Teller 22 mit einer Gummilage 23 und ist über ein Gelenk 24 an einem Schlitten 25 befestigt, der in einer vertikalen Führung 26 mittels einer pneumatischen Feder 27 federnd gehalten ist. Die Andrückplatte 21 wird mittels des Arms 16 der Aufnahmehilfsvorrichtung 6 hinten auf die Oberseite des aufzunehmenden Pakets abgesenkt und dann horizontal nach rückwärts verfahren, um auf das Pakets eine Horizontalkraft B auszuüben, wie bereits anhand der Figuren 1 bis 3 erläutert. Das Gelenk 24 erlaubt der Andrückplatte 21, der Schräglage des Pakets beim Aufnehmen zu folgen. Die Gummilage 23 bildet die Berührungsfläche gegen die Paketoberfläche und ist so ausgestaltet, um an möglichst vielen Punkten einer unebenen Paketoberfläche anzugreifen. Der Schlitten 25 wird durch die pneumatische Feder 27 mit einstellbarer, wegunabhängiger Kraft nach unten gedrückt und kann z.B. bis 50 mm nach oben weichen. Die Federkraft kann durch Änderung des Luftdruckes der Art der Pakete angepasst werden. Damit gelingt es auch Pakete mit sehr unebener und nicht belastbarer Oberfläche, wie z.B. mit Schrumpffolie umhüllte Kunststoff-Flaschen aufzunehmen.

Die für den Betrieb dieser Vorrichtung eingesetzten Antriebs- und Steuerorgane sind im Stand der Technik bekannt. Im wesentlichen wird der automatische Ablauf des Aufnahmevorganges mittels Abstands- und Kraftsensoren gesteuert. Ist die Aufnahmevorrichtung Teil einer Kommissionier-Anlage für Pakete, so kann sie mit einer an sich bekannten Bildverarbeitungssteuerung verbunden sein, mittels welcher die Umrisse der aufzunehmenden Pakete erkannt und zur Steuerung der Aufnahmefunktionen verarbeitet werden.

Die Vorrichtung kann ferner in entsprechender Weise zum definierten Absetzen von Paketen eingesetzt werden.

Insgesamt besitzt sie den Vorteil, dass sie die schonende Aufnahme von beliebigen, auch schweren Paketen, sowie solchen mit unstabiler Verpackung gestattet. Durch den doppelten Angriff an jedes Paket können die Kräfte besser verteilt werden. Die Gefahr einer Beschädigung der Verpackung ist ebenfalls herabgesetzt. Es können auch Pakete mit unebener Oberseite aufgenommen werden, da sich die Transportbänder 10 bzw. der Teller 21 der Aufnahmehilfsvorrichtung optimal an solche Unebenheiten anpassen und insbesondere eine Beschädigung vermeiden.

## Patentansprüche

1. Verfahren zum Aufnehmen von Stückgut von bzw. auf einer Unterlage mittels eines horizontal verfahrbaren Aufnahmetisches (1), wobei der Aufnahmetisch eine antreibbare Transporteinrichtung (4) für das Gut und mindestens an seinem in Verfahrrichtung liegenden Ende ein rollen- bzw. umlenkrollenartiges Aufnahmeorgan (5) besitzt und wobei oberhalb des Aufnahmetisches eine Aufnahmehilfsvorrichtung (6) vorgesehen ist, dadurch gekennzeichnet, dass der Aufnahmetisch (1) derart bis unmittelbar an eine vertikale Stirnfläche des aufzunehmenden Guts verfahren wird, dass das Aufnahmeorgan (5) zur Anlage an diese Stirnfläche gelangt, während die Aufnahmehilfsvorrichtung (6) von oben auf das Gut abgesenkt wird, bis sie dieses an seiner Oberseite berührt, und dass in einer Aufnahmephase das Aufnahmeorgan (5) so angetrieben wird, dass das Gut durch Eingriff des Aufnahmeorgans an seiner Stirnseite gegen die Oberseite des Aufnahmetisches angehoben wird, während die Aufnahmehilfsvorrichtung (6) bezüglich dem Gut so betätigt wird, dass sie auf das Gut ein die Anhebebewegung unterstützendes Drehmoment ausübt.

2. Verfahren nach Anspruch 1, wobei die Aufnahmehilfsvorrichtung (6) relativ zum Aufnahmetisch (1) horizontal und vertikal verfahrbar ist, dadurch gekennzeichnet, dass nach dem Anheben der Stirnseite des Guts auf den Aufnahmetisch (1) dieser und seine Transporteinrichtung (4) so lange gegenläufig mit gleicher Geschwindigkeit angetrieben werden, bis das Gut vom Aufnahmetisch im wesentlichen unterfahren ist, während die Aufnahmehilfsvorrichtung (6) in der Horizontalrichtung im wesentlichen stillsteht.

3. Verfahren nach Anspruch 2, wobei die Aufnahmehilfsvorrichtung (6) ferner eine Transporthilfseinrichtung für das Gut aufweist, dadurch gekennzeichnet, dass bei im wesentlichen unterfahrenem Gut die Transportvorrichtung (4) des Aufnahmetisches sowie die Transporthilfseinrichtung (10) für den Transport des Guts über den Aufnahmetisch synchron angetrieben werden.

4. Vorrichtung zur Durchführung des Verfahrens nach einem der vorangehenden Patentansprüche mit horizontal verfahrbarem Aufnahmetisch (1), der eine antreibbare Transporteinrichtung (4) für das Gut aufweist, mittels der es in Verfahrrichtung des Tisches darauf verschiebbar ist, sowie an dem entsprechenden Tischende angeordnete, ebenfalls antreibbare rollen- bzw. umlenkrollenartige Aufnahmeorgane (5) zum Angreifen an Stirnflächen des aufzunehmenden Guts, um dieses auf Tischhöhe anzuheben, dadurch gekennzeichnet, dass eine oberhalb des Aufnahmetisches (1) angeordnete Aufnahmehilfsvorrichtung (6) vorgesehen ist, welche auf die Oberseite des Guts absenkbar und so betätigbar ist, dass sie auf die Oberseite des Guts eine Kraft mit horizontaler Komponente ausübt, die ein das Abheben des Guts an seiner Stirnseite unterstützendes Drehmoment erzeugt.

5. Vorrichtung nach Anspruch 4, dadurch gekennzeichnet, dass die Aufnahmehilfsvorrichtung (6) mindestens ein in beiden Umlaufrichtungen antreibbares rollen- bzw. umlenkrollenartiges Organ (14) aufweist, das bei abgesenkter Aufnahmehilfsvorrichtung mit der Gutoberseite zusammenwirkt und beim Anheben des Guts auf den Aufnahmetisch in der einen Umlaufrichtung, beim Transport des aufgenommenen Guts über den Aufnahmetisch (1) in der anderen Umlaufrichtung angetrieben ist.

6. Vorrichtung nach Anspruch 5, dadurch gekennzeichnet, dass die Aufnahmehilfsvorrichtung (6) eine Transporthilfseinrichtung (10, 14) besitzt mit mindestens einem Transportband (10), das um das rollen- bzw. umlenkrollenartige Organ umgelenkt ist und das mit der Gutoberseite zusammenwirkt.

7. Vorrichtung nach Anspruch 6, dadurch gekennzeichnet, dass die Transporthilfseinrichtung (10, 14) an einem Gegentisch (8) angeordnet ist, um den das mindestens eine Transportband (10) umläuft, wobei der Gegentisch (8) in seiner horizontalen und vertikalen Lage bezüglich des Aufnahmetisches (1) verstellbar ist.

8. Vorrichtung nach Anspruch 7 dadurch gekennzeichnet, dass der Gegentisch (8) in eine Lage parallel zur Oberseite des Aufnahmetisches (1) bringbar ist, wobei in dieser Lage die Transporteinrichtung (4) des Aufnahmetisches (1) und die Transporthilfseinrichtung (10) synchron angetrieben sind zum Transport des Guts über den Aufnahmetisch.

9. Vorrichtung nach Anspruch 4, dadurch gekennzeichnet, dass die Aufnahmehilfsvorrichtung (6) mindestens ein plattenartiges Organ (21) aufweist, welches auf die Gutoberfläche absenkbar und horizontal verschiebbar ist.

10. Vorrichtung nach einem der vorangehenden Ansprüche 4 bis 9, dadurch gekennzeichnet, dass die Aufnahmehilfsvorrichtung (6) mit mindestens einem Messwertaufnehmer zur Bestimmung der Auflagekraft auf dem Gut versehen ist, der mit einem Absenkantrieb der Aufnahmehilfsvorrichtung regelverbunden ist.

11. Vorrichtung nach einem der vorangehenden Ansprüche 4 bis 10, dadurch gekennzeichnet, dass der Aufnahmetisch (1) Messwertaufnehmer besitzt zur Bestimmung der Lage des Aufnahmetisches bezüglich der Stirnfläche des Guts.

## Claims

1. Method for taking up an article from or on a support by means of a horizontally displaceable receiving table (1), wherein the receiving table possesses a driveable transporting installation (4) for the article and at least at its end facing the direction of displacement a roller or guide roller like pick-up member (5), and wherein an auxiliary pick-up device (6) is provided above the receiving table, characterised in that the receiving table (1) is driven immediately to a vertical front face of the article to be taken up in such a way that the pick-up member (5) comes into contact with this front face, while the auxiliary pick-up device (6) is lowered from above onto the article until it touches it at its top face, and that in a pick-up phase the pick-up member (5) is driven such that the article is lifted towards the top side of the receiving table by engagement of the pick-up member on its front side, while the auxiliary pick-up device (6) is operated relatively to the article in such a way that it exerts a torque onto the article supporting the lifting movement.

2. Method of claim 1 wherein the auxiliary pick-up device (6) is horizontally and vertically displaceable relative to the receiving table (1), characterised in that after lifting the front face of the article onto the receiving table (1), the latter and its transporting installation (4) are driven oppositely and with equal speed that long until the good is substantially supported, while the auxiliary pick-up device (6) stands substantially still in a horizontal direction.

3. Method of claim 2 wherein the auxiliary pick-up device (6) further comprises an auxiliary transport installation for the article, characterised in that after substantially supporting the good the transport installation (4) of the receiving table as well as the auxiliary transport installation (10) are synchronously driven for transporting the article over the receiving table.

4. Apparatus for carrying out the method of one of the preceding claims with a horizontally displaceable receiving table (1) comprising a driveable transporting installation (4) for the article, by means of which it is displaceable thereon in a direction of displacement of the table, as well as roller or guide roller like pickup members (5) arranged at the corresponding table end and also being driveable, for engaging the front faces of the article for lifting it onto the height of the table, characterised in that a auxiliary pick-up device (6) arranged above the receiving table (1) is provided, which is lowerable onto the top side of the article and driveable in such a way that it exerts a force onto the top side of the article with horizontal component, which generates a torque supporting the lifting of the article at its front side.

5. Apparatus of claim 4, characterised in that the auxiliary pick-up device (6) comprises at least one roller or guide-roller like member (14) driveable in both directions of rotation, which, when the auxiliary pick-up device is lowered, co-operates with the article's top side and is driven in one direction of rotation during lifting the article onto the receiving table and into the other direction of rotation during transport of the taken up article over the receiving table (1).

6. Apparatus of claim 5 characterised in that the auxiliary pick-up device (6) possesses a auxiliary transport installation (10, 14) with at least one conveyor belt (10) which is guided around the roller or guide roller like member and co-operates with the surface of the article.

7. Apparatus of claim 6 characterised in that the auxiliary transport installation (10, 14) is arranged on an opposing table (8), around which the at least one conveyor belt (10) is running, wherein the opposing table (10) is displaceable in its horizontal and vertical position in respect to the receiving table (1).

8. Apparatus of claim 7 characterised in that the opposing table (8) can be brought into a position parallel to the top side of the receiving table (1), wherein in this position the transporting installation of the receiving table (1) and the auxiliary transporting installation (10) are driven synchronously for transporting the article over the receiving table.

9. Apparatus of claim 4 characterised in that the auxiliary pick-up device comprises at least one plate like member (21), which can be lowered into the top face of the article and displaced horizontally.

10. Apparatus of one of the preceding claims 4 to 9 characterised in that the auxiliary pick-up device (6) is provided with least one sensor for the determination the pressure force on the article, which is connected to a lowering drive of the auxiliary pick-up device in a regulating manner.

11. Apparatus of one of the preceding claims 4 to 10 characterised in that the receiving table (1) comprises sensors for she determination of the position of the receiving table in respect to the front face of the article.

## Revendications

1. Procédé pour saisir des pièces sur un support, respectivement pour les en enlever au moyen d'une table réceptrice mobile (1) comportant un dispositif de transport (4) pour les pièces et au moins à son extrémité antérieure un organe de saisie en forme de rouleau ou de rouleau de renvoi (5), ainsi qu'un ensemble préhensile auxiliaire (6) situé au-dessus de la table réceptrice, caracterisé en ce que l'on fait avancer la table réceptrice (1) jusqu'au voisinage immédiat d'une face verticale de la pièce à saisir, que l'on provoque un contact direct de l'organe de saisie (5) avec cette face tout en abaissant l'ensemble préhensile auxiliaire (6) vers la pièce jusqu'à toucher sa surface supérieure, et en ce que pendant une phase de saisie l'organe de saisie (5) est actionné de manière à ce que son action sur la pièce soulève celle-ci du côté frontal vers la surface supérieure de la table réceptrice pendant que l'ensemble préhensile auxiliaire (6) est actionné par rapport à la pièce de façon à exercer sur celle-ci un moment qui contribue à son soulèvement.

2. Procédé selon la revendication 1, l'ensemble préhensile auxiliaire (6) pouvant être déplacé horizontalement et verticalement par rapport à la table réceptrice (1), caractérisé en ce qu'après avoir soulevé l'extrémité frontale de la pièce sur la table réceptrice (1) celle-ci et son dispositif de transport (4) sont actionnés en sens contraires et à la même vitesse pendant que l'ensemble préhensile auxiliaire reste essentiellement immobile en direction horizontale, jusqu'à ce que la table se soit essentiellement insérée sous la pièce.

3. Procédé selon la revendication 2, l'ensemble préhensile auxiliaire (6) comportant en outre un dispositif de transport auxiliaire pour la pièce, caractérisé en ce que lorsque la table est essentiellement insérée sous la pièce le dispositif de transport (4) et le dispositif de transport auxiliaire (10) sont actionnés en synchronisme pour transporter la pièce sur la table réceptrice.

4. Dispositif pour réaliser le procédé selon une des revendications précédentes, avec une table réceptrice (1) mobile horizontalement et comportant un dispositif de transport (4) pour la pièce permettant de la déplacer sur la table en direction de la trajectoire de celle-ci, ainsi que des organes de saisie en forme de rouleau ou de rouleau de renvoi (5) disposés à l'extrémité correspondante de la table pour venir en prise avec la surface frontale de la pièce à saisir et la soulever à la hauteur de la table, caractérisé en ce qu'il est prévu un ensemble préhensile auxiliaire (6) disposé au-dessus de la table réceptrice (1), pouvant être abaissé sur la surface supérieure de la pièce et actionné de manière à exercer sur la partie supérieure de la pièce une force à composante horizontale créant un moment qui contribue au soulèvement de la pièce du côté de sa face frontale.

5. Dispositif selon la revendication 4, caractérisé en ce que l'ensemble préhensile auxiliaire (6) comporte au moins un organe (14) en forme de rouleau ou de rouleau de renvoi pouvant être actionné dans les deux sens de rotation et coopérant, lorsque l'ensemble préhensile auxiliaire est abaissé, avec la surface supérieure de la pièce, cet organe étant actionné dans un sens lors du soulèvement de la pièce sur la table réceptrice et dans le sens opposé lors du transport de la pièce saisie sur cette table.

6. Dispositif selon la revendication 5, caractérisé en ce que l'ensemble préhensile auxiliaire (6) comporte un dispositif de transport auxiliaire (10, 14) avec au moins un ruban convoyeur (10) faisant retour sur l'organe en forme de rouleau ou de rouleau de renvoi et coopérant avec la surface supérieure de la pièce.

7. Dispositif selon la revendication 6, caractérisé en ce que le dispositif de transport auxiliaire (10, 14) est agencé sur une table auxiliaire (8) entourée par ledit au moins un ruban convoyeur (10), la position de la table auxiliaire (8) étant réglable horizontalement et verticalement par rapport à la table réceptrice (1).

8. Dispositif selon la revendication 7, caractérisé en ce que la table auxiliaire (8) peut être amenée en une position parallèle à la surface supérieure de la table réceptrice (1), position en laquelle le dispositif de transport (4) de la table réceptrice (1) et le dispositif de transport auxiliaire (10) sont actionnés de façon synchrone pour transporter la pièce sur la table réceptrice.

9. Dispositif selon la revendication 4, caractérisé en ce que l'ensemble préhensile auxiliaire (6) comporte au moins un organe (21) en forme de plaque pouvant être abaissé sur la pièce et déplacé horizontalement.

10. Dispositif selon une des revendications 4 à 9, caractérisé en ce que l'ensemble préhensile auxiliaire (6) comporte au moins un senseur mesurant la force appliquée sur la pièce et connecté par un circuit de commande avec un mécanisme d'abaissement de l'ensemble préhensile auxiliaire.

11. Dispositif selon une des revendications 4 à 10, caractérisé en ce que la table réceptrice porte des senseurs pour déterminer la position de la table réceptrice par rapport à la surface frontale de la pièce.
